# EUROPEAN PATENT APPLICATION

(11) **EP 4 786 776 A1**
(43) Date of publication of application: **05.08.2026**
(21) Application number: 26150245.4
(22) Date of filing: 05.01.2026
(51) Int. Cl.: F02K 1/12

(54) **EXHAUST NOZZLE FOR A GAS TURBINE ENGINE**

(30) Priority: 31.01.2025 GB 202501409
(71) Applicant: Rolls-Royce plc, London N1 9FX (GB)
(72) Inventor: Colebrooke, Jack, Derby, DE24 8BJ (GB)
(74) Representative: Rolls-Royce plc

(57) **Abstract**

There is disclosed an exhaust nozzle 30 for a gas turbine engine, comprising an exhaust structure 32 and a flap 34 configured to bound a passageway 36 through the exhaust structure. The flap 34 is coupled to the exhaust structure in a linkage arrangement configured to move the flap by compound translation and rotation with a single degree of freedom between a first orientation corresponding to a maximum throat area of the passageway and a second orientation corresponding to a minimum throat area of the passageway.

## Description

### CROSS REFERENCE TO RELATED APPLICATIONS

This represents the first application directed towards the subject-matter.

### FIELD

This disclosure relates to an exhaust nozzle for a gas turbine engine, in which a linkage arrangement moves a flap in compound translation and rotation.

### BACKGROUND

An exhaust nozzle of a gas turbine engine may include a pair of articulating flaps which enable variable control of the area of the exhaust nozzle..

### SUMMARY

According to a first aspect there is provided an exhaust nozzle for a gas turbine engine, comprising:
an exhaust structure configured to receive an exhaust flow of gas;
a flap configured to bound a passageway through the exhaust structure to convey the exhaust flow of gas to an exterior of the gas turbine engine,
wherein the flap is coupled to the exhaust structure in a linkage arrangement configured to move the flap by compound translation and rotation with a single degree of freedom between a first orientation corresponding to a maximum throat area of the passageway and a second orientation corresponding to a minimum throat area of the passageway.

In an embodiment the exhaust nozzle comprises an actuator configured to drive a driven link of the linkage arrangement to move the flap from the first orientation to the second orientation.

In an embodiment the exhaust nozzle is configured for passive return of the flap from the second orientation to the first orientation.

The exhaust nozzle may be configured for passive return of the flap from the second orientation to the first orientation by the linkage arrangement being configured so that exhaust gas pressure from the passageway (e.g., a pressure force exerted on the flat due to flow through the passageway) biases the linkage arrangement to move the flap towards the first orientation from the second orientation. The or any actuator may be configured to permit corresponding movement of the driven link of the linkage arrangement. It may be that the or any actuator is not configured to actively drive the driven link of the linkage arrangement to move the flap from the second orientation to the first orientation. However, the or any actuator may be configured to permit such movement in a controlled manner, for example by selectively reducing a resistance to such movement presented by the actuator.

In an embodiment the linkage arrangement is a four bar linkage formed by: the exhaust structure forming a fixed link; the flap forming a floating link; an input link coupled to the fixed link at an input ground joint and coupled to the flap at an input flap joint; an output link coupled to the fixed link at an output ground joint and coupled to the flap at an output flap joint.

In an embodiment the input link and the output link form rockers of the four bar linkage.

In an embodiment, a length of the input link is within 20% of a length of the output link, wherein the lengths are determined between rotational centres of joints associated with the support structure and the flap respectively.

In an embodiment, the flap defines a floating link axis between the input flap joint and the output flap joint, and wherein the input and output links are provided on opposite sides of the floating link axis.

In an embodiment, the linkage arrangement has a range of travel corresponding to movement of the flap between the first orientation and the second orientation, and wherein the linkage arrangement is configured so that throughout the range of travel, simultaneous rotation of the input and output links about the input and output ground joints respectively is in opposing directions.

For example, during movement from the first position to the second position, rotation of the input link about the input ground joint may be in a clockwise direction as viewed from a first side of the linkage arrangement and simultaneous rotation of the output link about the output ground joint may be in an anti-clockwise direction. During movement from the second position to the first position, rotation of the input link about the input ground joint may be in an anti-clockwise direction as viewed from the first side of the linkage arrangement and simultaneous rotation of the output link about the output ground joint may be in a clockwise direction.

In an embodiment, the input link defines an input link axis between rotational centres of its respective joints, and wherein the output link defines an output link axis between rotational centres of its respective joints. In an embodiment, the linkage arrangement is configured to define a load alignment configuration in which the input link axis and the output link axis are parallel or within 10° or parallel.

In an embodiment, the load alignment configuration corresponds to the second orientation of the flap.

In an embodiment. the exhaust nozzle extends along a longitudinal axis (X) from a forward inlet to a rear outlet, and the input flap joint is provided at a longitudinally forward position of the flap relative to the output flap joint.

In an embodiment, the linkage arrangement has a range of travel corresponding to movement of the flap between the first orientation to the second orientation. In an embodiment, the linkage arrangement is configured so that movement through the range of travel from the second orientation to the first orientation causes the output flap joint to move along an axis (Y) normal to the longitudinal axis (X) by an amount greater than the input flap joint, to vary a pitch of the flap through the range of travel to a more divergent configuration in the second orientation.

In an embodiment, the linkage arrangement has a range of travel corresponding to movement of the flap between the first orientation and the second orientation, and the linkage arrangement is configured so that throughout the range of travel, simultaneous rotation of the input and output links about the input and output ground joints respectively is in opposing directions. In an embodiment, the input link has a starting angular orientation corresponding to the flap being in the first orientation, and an angular travel corresponding to the range of travel of the linkage arrangement. In an embodiment, the output link has a starting angular orientation corresponding to the flap being in the first orientation, and an angular travel corresponding to the range of travel of the linkage arrangement. In an embodiment, for each of the input flap joint and output flap joint, movement by rotation of the respective link through its angular travel causes translational movement of the joint, including longitudinal movement along the longitudinal axis (X), and transverse movement along a transverse axis (Y), wherein the starting angular orientations are selected so that the respective angular travels of the input link and output link cause greater translational displacement along the transverse axis (Y) of the output flap joint than the input flap joint. Accordingly, a pitch of the flap through the range of travel may vary to a more divergent configuration in the second orientation.

It may be that the input link is angularly offset from the transverse axis (Y) by an acute angle theta-I and the output link is angularly offset from the transverse axis (Y) by an acute angle theta-O. The starting angular orientations and angular travels of the respective links may be such that the angular travel of the input link (towards the flap being in the second orientation) corresponds to decreasing theta-I, and the angular travel of the output link corresponds to increasing theta-O. This may correspond to a larger change in cosine(theta-O) than cosine(theta-I). For example, where the starting angular orientations correspond to similar values of theta-I and theta-O, the angular travel of the input link corresponds to a low change in cosine(theta-I) as compared with change in cosine(theta-O) for the angular travel of the output link.

In an embodiment, the exhaust nozzle comprises two opposing flaps bounding the passageway, each provided with a respective linkage arrangement. It may be that the linkage arrangements of the two flaps are independently operable, or are actuated for synchronous symmetrical movement.

According to a second aspect there is provided a gas turbine engine comprising the exhaust nozzle according to the first aspect.

### BRIEF DESCRIPTION OF THE DRAWINGS

Embodiments will now be described by way of example only with reference to the accompanying drawings, in which:
FIG. 1 is a simplified top view of an aircraft comprising a propulsion machine;
FIG. 2 is a sectional view of an example gas turbine engine and an exhaust nozzle;
FIG. 3 is a perspective wireframe view of flaps within an exhaust structure;
FIG. 4 is a perspective view of an example exhaust nozzle;
FIGs 5 and 6 are schematic side views of an example linkage mechanism in a minimum throat orientation and maximum throat orientation respectively; and
FIG. 7 is a plot of angular travel of joints of the example linkage mechanism.

### DETAILED DESCRIPTION

### Aircraft

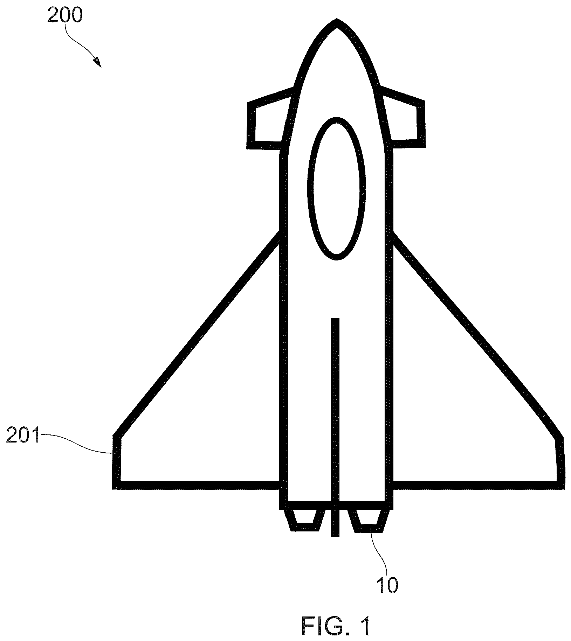

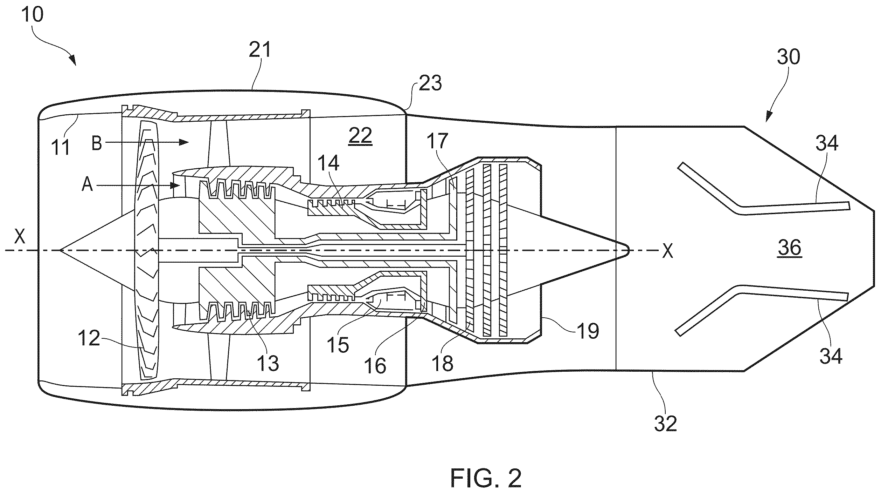

FIG. 1 shows a simplified and schematic view of an aircraft 200 comprising an airframe 201 and a propulsion machine 10. The propulsion machine 10 may be a gas turbine engine 10 in accordance with the gas turbine engine 10 described below with reference to FIG. 2.

### Propulsion machine

FIG. 2 shows a ducted fan gas turbine engine 10 (which is an example of a propulsion machine 10) having a principal and rotational axis X-X. The gas turbine engine 10 is suitable for use with the aircraft 200 described above with FIG. 1. The engine comprises, in axial flow series, an air intake 11, a propulsive fan 12, an intermediate-pressure compressor 13, a high-pressure compressor 14, a combustor 15, a high-pressure turbine 16, an intermediate pressure turbine 17, a low-pressure turbine 18 and a core engine exhaust outlet 19. A nacelle 21 generally surrounds the gas turbine engine 10 and defines the intake 11, a bypass duct 22 and a bypass exhaust outlet 23.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate-pressure compressor 13 compresses the air flow A directed into it before delivering that air to the high-pressure compressor 14 where further compression takes place.

The compressed air exhausted from the high-pressure compressor 14 is directed into the combustor 15 where it is mixed with fuel and the mixture combusted. The resultant hot combustion products then expand through, and thereby drive the high, intermediate and low-pressure turbines 16, 17, 18 before being exhausted through the core engine exhaust outlet 19 to provide additional propulsive thrust. The high, intermediate and low-pressure turbines respectively drive the high and intermediate pressure compressors 14, 13 and the fan 12 by suitable interconnecting shafts.

### Exhaust nozzle

The gas turbine engine 10 further comprises an exhaust nozzle 30. The exhaust nozzle 30 is disposed at a rear end of the gas turbine engine 10 and generally comprises an exhaust structure 32 generally in the form of a duct, a first flap 34 (also referred to as a petal) and a second flap 34. The exhaust structure 32 is configured to receive an exhaust flow of gas from the combustor 15 (i.e., the first air flow A after it has passed through the combustor 15). The exhaust structure 32 is further configured to receive the second air flow B after it has passed through the bypass duct 22. The first and second flaps 34in part define an exhaust gas passageway 36 configured to convey the exhaust flow of gas to an exterior of the gas turbine engine 10. Accordingly, the exhaust gas passageway 36 is configured to discharge the exhaust flow of gas from the turbines 16, 17, 18 and the combustor 15 of the gas turbine engine. As will be described in further detail below, the first and second flaps 34 are moveable relative to the exhaust structure 32 to vary a throat area of the passageway 36.

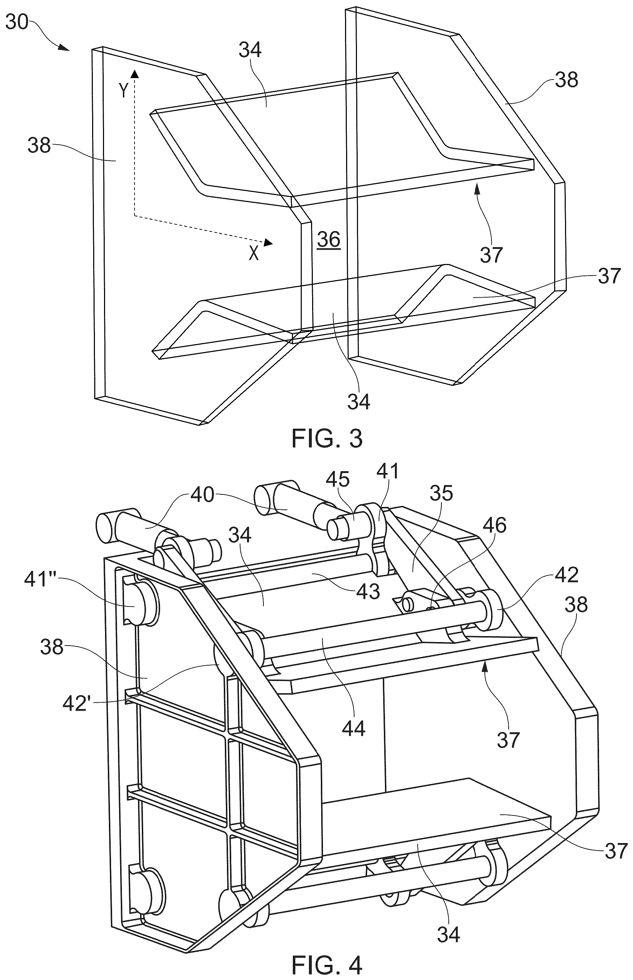

FIG. 3 is a perspective view of an example exhaust structure 32, suitable for use with the exhaust nozzle 30 of the gas turbine engine of FIG. 2. As shown, the exhaust structure 32 comprises side walls 38 which cooperate with the first and second flaps 34 to define the exhaust gas passageway 36, such that the side walls 38 partially define the exhaust gas passageway 36. Each of the first and second flaps 34 extend between the first and second side walls 38. FIG. 3 shows the orientation of the exhaust structure 32 with reference to a longitudinal direction X (e.g., corresponding to the principle rotation axis X-X of FIG. 2), and a transverse direction Y, orthogonal to the longitudinal direction X. In this example the transverse direction Y corresponds to a vertical direction. The flaps 34 are spaced apart and oppose one another along the transverse direction Y, such that in this example there is an upper flap 34 and a lower flap 34, disposed in respective upper and lower portions of the exhaust nozzle 30.

Each of the flaps 34 comprise a control surface 37 on an inward surface (e.g., a surface of the flap which defines the passageway 36 and opposes the other flap). As shown in FIG. 3, each of the flaps 34 has a convergent-divergent profile, but in other examples other flap configurations may be used, such as a convergent only profile, or a divergent only profile.

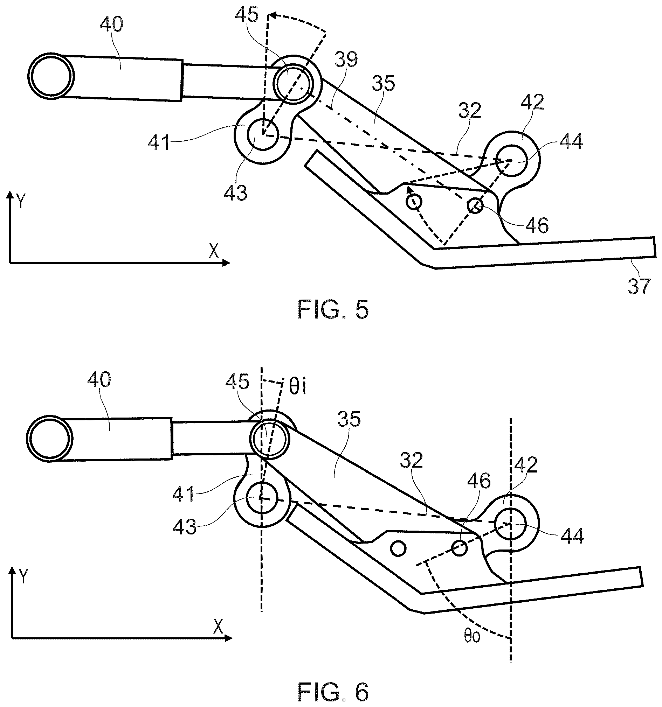

FIG. 4 is a detailed perspective view of the same example exhaust structure 32 of FIG. 3, with added detail to show a linkage mechanism for movement of the flaps 34, which is visible for the upper flap 34. FIGs 5 and 6 are schematic cross-sectional views of the same linkage mechanism for one of the flaps 34, with the flap 34 in a minimum throat orientation in FIG. 5 (corresponding to a minimum throat area of the passageway), and in a maximum throat orientation in FIG. 6 (corresponding to a maximum throat area of the passageway. The linkage mechanism is configured to move the flap in translation and rotation between the minimum throat orientation and the maximum throat orientation. The linkage mechanism will now be described with reference to both FIGs 4-6.

In this example, the linkage mechanism is in the form of a four bar linkage, and common terminology relating to such linkages is adopted in this description. As best shown in FIGs 5-6, a fixed link of the four-bar linkage is defined by the exhaust structure 32 (indicated schematically by the dashed line between joints 43, 44 to be described). A support structure 35 of the flap 34 provides a floating link of the four-bar linkage. An input link 41 and an output link 42 extend between the fixed link 32 and the floating link 35. The input link 41 is rotationally coupled to the fixed link 32 at a forward input ground joint 43 (i.e., at a relatively forward position along the longitudinal axis X), and the output link 42 is rotationally coupled to the fixed link 32 at an aft output ground joint 44 (i.e., at a relatively rearward position along the longitudinal axis X). The input link 41 is rotationally coupled to the floating link 35 (the support structure of the flap) at an input flap joint 45, and the output link 42 is rotationally coupled to the floating link 35 (the support structure of the flap) at an output flap joint 46. Each of the input and output links 41, 42 are relatively shorter than the fixed link 32 and the floating link 45, such that the input and output links are rockers of the linkage mechanism. However, an angular travel of the input and output links 41, 42 is limited by a travel of an actuator arm 40. The actuator arm 40 is rotationally coupled to the exhaust structure 32 or other support structure of the engine, and rotationally coupled to the input link or floating link. In this example, the actuator arm 40 is coupled to the input link at the input flap joint 45 (and thereby also effectively coupled to the floating link).

FIG. 4 best shows the particular form of the joints of the linkage as implemented in this example. The ground joints are each formed by rotational coupling rods 41, 42 that extend between rod mounts 41', 42' in the side walls 38 of the exhaust structure 32, such that the exhaust structure 32 forms the fixed link. The flap joints 45, 46 are each formed by rotational pin joints between the input and output links, and the floating link (the support structure 35 of the flap 34). As shown, in this example the pin joints 45, 46 also extend to rotationally couple with the actuator 40. Accordingly, in use, movement of the actuator drives rotation of the input link and thereby movement of the linkage arrangement. **In** this example, the actuator 40 is a linear actuator having an actuator range of travel within which it extends and retracts to control movement of the linkage mechanism. **In** other examples, the actuator may take other forms, for example as a rotational actuator or cam acting on the linkage arrangement.

The linkage arrangement has a range of travel corresponding to movement of the flap between the minimum throat orientation and the maximum throat orientation. The range of travel of the linkage arrangement corresponds to ranges of travel for each of the input link 41, output link 42 and floating link 35 (the flap), with the input link 41 and output link 42 having angular ranges of travel about their respective ground joints 43, 45, and the floating link 35 having a range of compound translational and rotational travel. The input link and output link have limited angular travels (i.e., are not each fully rotatable), whether as a result of the configuration of the respective lengths of the links, or because of the associated range of travel of the actuator 40. Example angular travels of the links are shown by dashed arcuate arrows in FIG. 5. Correspondingly, the floating link 35 has a single degree of freedom in its travel between the maximum throat orientation and the minimum throat orientation. The definition of a single degree of freedom relates to there only being a single path along which the floating link translates and rotates between the maximum throat orientation and the minimum throat orientation. For example, it is not possible to initially perform more rotation and then more translation on a first path between the two orientations, and on a second path initially perform more translation and then more rotation. An alternative way to define the nature of the single degree of freedom travel is that the angular position of the input link is determinative of the orientations of the floating link and output link, or that for each angular position of the input link, there is a single corresponding angular position of the output link, and single corresponding translational position and angular orientation of the floating link.

As shown in FIG. 5, the floating link 35 has an axis 39 between the input and output flap joints 45, 46, and the input and output links 41, 42 are provided on opposing sides of the axis 39. The input and output links 41, 42, as rockers of the four-bar linkage mechanism, therefore rotate in opposing angular directions about the respective ground joints 43, 44. The opposing angular directions are shown by the arcuate arrows in FIG. 5 indicating rotation to move from the minimum throat orientation as shown in FIG. 5 to the maximum throat orientation shown in FIG. 6. In particular, the input link is configured to rotate in an anti-clockwise direction (in the drawing as shown) about the input ground joint 43 to move the linkage mechanism to the maximum throat orientation, whereas the output link 42 is configured to rotate in a clockwise direction (in the drawing as shown) about the output ground joint 44 to move the linkage mechanism to the maximum throat orientation. In this example, the linkage mechanism is configured so that the input and output links 41, 42 remain on opposing sides of the axis 39 throughout the travel of the linkage mechanism, but in other examples the travel may be greater or the linkage mechanism may be differently configured so that one or both of the link arms crosses the axis 39.

An angular frame of reference is defined about the respective ground joints 43, 44, and with reference to the transverse direction Y (as introduced above). Each of the input link 41 and the output link 42 has a respective link axis defined between its joints (i.e., the respective ground and flap joints), and is offset from the transverse direction Y by a local acute angle theta (i.e., theta-i or θi for the input link, and theta-o or θo for the output link), as shown in FIG. 6c. The linkage mechanism may be configured so that the input and output links adopt advantageous angular orientations in selected configurations or orientations of the linkage mechanism.

For example, as shown in FIG. 5, the axes of the input and output links are relatively closely aligned so that the linkage mechanism is in a load alignment configuration, for example with the axes of the input and output links within 10° of each other. Forces from the exhaust gas in the passageway act on the flap 34, which is transferred into the exhaust structure 32 by the input and output link arms. When they are relatively angularly aligned and on opposing sides of the axis 39 of the flap, one of the input and output links will be under tension, whereas the other will be under compression. This is considered to provide advantageous load reaction into the exhaust structure 32. In this example, the load alignment configuration corresponds to the minimum throat area orientation of the flap and linkage mechanism, which may be a maximum operating flap load condition of the exhaust nozzle. However, in other examples, the load alignment configuration may be at other orientations, for example between the minimum and maximum throat orientations, or at any location between.

The configuration of the input and output links and the position of the respective joints can be set to provide for a target range of travel of the linkage mechanism, corresponding to a target profile of movement, e.g., a target compound translational and rotational travel. Such a target may be defined to achieve a specified profile of nozzle throat area vs movement of the actuator 40, and/or a specified profile of flap angular orientation vs movement of the actuator 40.

By way of example only, it is a target to achieve translational movement along the Y direction to move the flap 34 from the minimum throat orientation to the maximum throat orientation, and it is also a target to rotate the flap 34 to increase a downstream divergence of the flap 34 (e.g., to increase a divergent angle away from the longitudinal axis X). This may be achieved by suitable configuration of the links and positions of the input and output links. In this particular example, the opposing positions of the input and output links relative to the axis 39 of the flap assists with achieving the target translational and rotational movement. Rotation of both the input link and the output link is so as to increase translational rotation of the respective flap joints 45, 46 along the transverse direction Y, however the angular orientations of the input and output links may be such that there is relatively more translational movement along the transverse direction Y for the output flap joint, corresponding to increasing a pitching or divergent angle of the flat 34 as discussed above. This may be achieved in a number of ways, for example by the output link having a relatively longer length between its joints. However, in this particular example, the input and output links are of substantially the same length and the relatively larger movement at the output link is achieved by suitable configuration of the angular orientations of the input and output links, as will be described below.

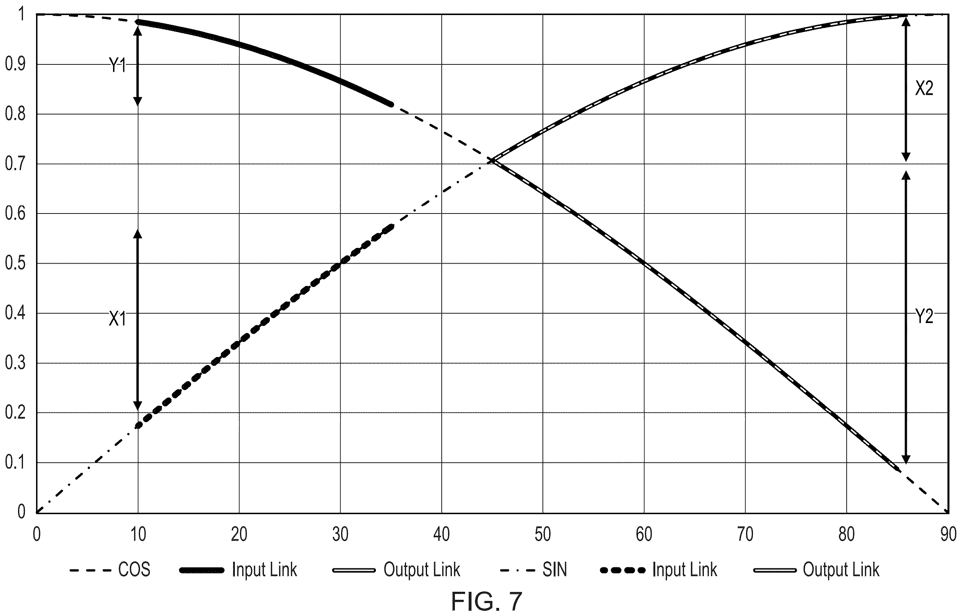

The dashed arcs in FIG. 5 schematically indicate an angular travel of the input and output links relative to the respective ground joints. In this example, the angular travel of the input link is for a theta-i of between 35° (minimum throat orientation) and 10° (maximum throat orientation), whereas the angular travel of the output link is for a theta-o of between 45° (minimum throat orientation) and 85° (maximum throat orientation). The difference in angular travel arises because the angular position of the input link corresponds to a relatively high translation of the respective flap joint along the longitudinal direction X and relatively low translation along the transverse direction Y, owing to theta-i being low and moving towards 0 (i.e. such that cosine (theta-i) is relatively high). In contrast, the output joint starts at the minimum throat orientation already at a relatively high theta-o, which increases. This corresponds to a relatively high translation along the transverse direction and relatively low translation along the longitudinal direction X. This is illustrated in FIG. 7, which is a plot of the angular travels of the respective input as visualised as sine and cosine functions of the respective angles. Cosine corresponds to translation along the X direction, whereas sine corresponds to translation along the Y direction. One way of viewing the travel of the linkage mechanism is to consider that the output link to a large extent follows the longitudinal travel of the input link (or rather, the output flap joint follows the longitudinal travel of the input flap link), which is represented in FIG. 7 by similar dimensions X1 (proportional to longitudinal translation of the input flap joint) and X2 (proportional to longitudinal translation of the output flap joint). However, owing to the angular positions of the links, the output link is at an angular region where the rate of transverse movement relatively high to achieve the longitudinal translation. Accordingly, dimension Y2 (proportional to transverse translation of the output flap joint) is significantly larger than dimension Y1 (proportional to transverse translation of the input flap joint). This results in the pitching or increasing divergent angle of the flap in between the minimum throat orientation and the maximum throat orientation.

Further, it can be observed that, by providing the input and output links on opposing sides of the axis 39 of the flap, the transverse translation of the flap is achieved within a relatively compact linkage mechanism with respect to the longitudinal axis. By way of comparison, if a trapezoidal arrangement for a four bar linkage mechanism were used instead (e.g., with parallel input and output links), the longitudinal profile of the linkage mechanism would be greater, whereas in the present arrangement both links are directed towards each other along the longitudinal direction, and oriented to take advantage of a natural transverse profile of the flap, with a desirable forward mounting point at a relatively outboard location (i.e., away from the passageway), and the gas washed surface 37 of the flap necessarily adopting an inboard location.

The example arrangement beneficially permits simple actuation. The actuator 40 may be provided to only actively actuate movement against the prevailing aerodynamic forces on the flap - i.e., to move the linkage mechanism towards the minimum throat orientation (e.g. by extending against a compressive force). The actuator 40 may be configured to permit (e.g., selectively permit) movement in the opposite direction (i.e., towards the maximum throat orientation) as driven by the prevailing aerodynamic force forces on the flap. The actuator may be of any suitable type, for example as powered by an electric motor (e.g. a rotational or linear motor), by hydraulic actuation, or any other suitable technology.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. An exhaust nozzle for a gas turbine engine, comprising:
an exhaust structure configured to receive an exhaust flow of gas;
a flap configured to bound a passageway through the exhaust structure to convey the exhaust flow of gas to an exterior of the gas turbine engine,
wherein the flap is coupled to the exhaust structure in a linkage arrangement configured to move the flap by compound translation and rotation with a single degree of freedom between a first orientation corresponding to a maximum throat area of the passageway and a second orientation corresponding to a minimum throat area of the passageway.

2. The exhaust nozzle of claim 1, comprising an actuator configured to drive a driven link of the linkage arrangement to move the flap from the first orientation to the second orientation.

3. The exhaust nozzle of claim 2, configured for passive return of the flap from the second orientation to the first orientation.

4. The exhaust nozzle of any one of the preceding claims, wherein the linkage arrangement is a four bar linkage formed by:
the exhaust structure forming a fixed link;
the flap forming a floating link.
an input link coupled to the fixed link at an input ground joint and coupled to the flap at an input flap joint;
an output link coupled to the fixed link at an output ground joint and coupled to the flap at an output flap joint.

5. The exhaust nozzle of claim 4, wherein the input link and the output link form rockers of the four bar linkage.

6. The exhaust nozzle of claim 4 or 5, wherein a length of the input link is within 20% of a length of the output link, wherein the lengths are determined between rotational centres of joints associated with the support structure and the flap respectively.

7. The exhaust nozzle of any one of claims 4-6, wherein the flap defines a floating link axis between the input flap joint and the output flap joint, and wherein the input and output links are provided on opposite sides of the floating link axis.

8. The exhaust nozzle of any one of claims 4 to 7, wherein the linkage arrangement has a range of travel corresponding to movement of the flap between the first orientation and the second orientation, and wherein the linkage arrangement is configured so that throughout the range of travel, simultaneous rotation of the input and output links about the input and output ground joints respectively is in opposing directions.

9. The exhaust nozzle of any one of claims 4 to 8, wherein the input link defines an input link axis between rotational centres of its respective joints, and wherein the output link defines an output link axis between rotational centres of its respective joints; and
wherein the linkage arrangement is configured to define a load alignment configuration in which the input link axis and the output link axis are parallel or within 10° or parallel.

10. The exhaust nozzle of claim 9, wherein the load alignment configuration corresponds to the second orientation of the flap.

11. The exhaust nozzle of any one of claims 4 to 10, wherein the exhaust nozzle extends along a longitudinal axis (X) from a forward inlet to a rear outlet, and;
wherein the input flap joint is provided at a longitudinally forward position of the flap relative to the output flap joint.

12. The exhaust nozzle of claim 11, wherein the linkage arrangement has a range of travel corresponding to movement of the flap between the first orientation and the second orientation;
wherein the linkage arrangement is configured so that movement through the range of travel from the second orientation to the first orientation causes the output flap joint to move along an axis (Y) normal to the longitudinal axis (X) by an amount greater than the input flap joint, to vary a pitch of the flap through the range of travel to a more divergent configuration in the second orientation.

13. The exhaust nozzle according to claim 11, wherein the linkage arrangement has a range of travel corresponding to movement of the flap between the first orientation and the second orientation, and wherein the linkage arrangement is configured so that throughout the range of travel, simultaneous rotation of the input and output links about the input and output ground joints respectively is in opposing directions;
wherein the input link has a starting angular orientation corresponding to the flap being in the first orientation, and an angular travel corresponding to the range of travel of the linkage arrangement;
wherein the output link has a starting angular orientation corresponding to the flap being in the first orientation, and an angular travel corresponding to the range of travel of the linkage arrangement;
wherein for each of the input flap joint and output flap joint, movement by rotation of the respective link through its angular travel causes translational movement of the joint, including longitudinal movement along the longitudinal axis (X), and transverse movement along a transverse axis (Y);
wherein the starting angular orientations are selected so that the respective angular travels of the input link and output link cause greater translational displacement along the transverse axis (Y) of the output flap joint than the input flap joint.

14. The exhaust nozzle according to any preceding claims, comprising two opposing flaps bounding the passageway, each provided with a respective linkage arrangement.

15. A gas turbine engine comprising the exhaust nozzle according to any one of the preceding claims.
